# EUROPÄISCHE PATENTANMELDUNG

(11) **EP 0 768 217 A1**
(43) Veröffentlichungstag der Anmeldung: **16.04.1997**
(21) Anmeldenummer: 96116331.8
(22) Anmeldetag: 11.10.1996
(51) Int. Cl.: B60R 21/26

(54) **Gasgenerator zum Befüllen eines in einem Fahrzeug angeordneten Airbags**

(30) Priorität: 12.10.1995 DE 19538052
(71) Anmelder: HS Technik und Design Technische Entwicklungen GmbH, D-82234 Wessling (DE)
(72) Erfinder: Specht, Martin, 82340 Feldafing (DE)
(74) Vertreter: Nöth, Heinz, Dipl.-Phys.

(57) **Zusammenfassung**

Gasgenerator zum Befüllen eines in einem Fahrzeug angeordneten Airbags mit einem Druckbehälter (1), in welchem bei Normalbetrieb des Fahrzeugs bei geschlossenem Behälter ein Füllgas unter Druck gehalten wird und der zum Befüllen des Airbags geöffnet wird, und einem Drucksensor (2) zur Überwachung des im Behälterinnern herrschenden Innendrucks, wobei ein den Behälterinnenraum mitumschließendes Behälterteil (3), auf welches der Innendruck im Normalbetrieb wirkt, ein Bestandteil des Drucksensors (2) ist und beim Abfall des Innendrucks unter einen bestimmten Wert aus seiner Normalposition zur Auslösung eines Sensorsignals bewegbar ist.

## Beschreibung

Die Erfindung betrifft einen Gasgenerator zum Befüllen eines in einem Fahrzeug angeordneten Airbags mit einem Druckbehälter, in welchem bei Normalbetrieb bei geschlossenem Behälter ein Füllgas unter Druck gehalten wird und der zum Befüllen des Airbags geöffnet wird, und einem Drucksensor zur Überwachung des im Behälterinnern herrschenden Innendruckes.

Aus der EP 0 621 160 A2 ist ein Gasgenerator zum Befüllen eines in einem Fahrzeug angeordneten Airbags bekannt, bei welchem in einem Druckbehälter Füllgas bzw. Füllgaskomponenten unter Druck aufbewahrt werden. Im normalen Fahrbetrieb des Fahrzeugs ist der Behälter hermetisch und druckdicht abgeschlossen, so daß kein Gas entweichen kann. Zum Befüllen des Airbags wird der Behälter geöffnet, wofür beispielsweise ein pyrotechnisch angetriebenes Betätigungsteil dient, mit welchem der Druckbehälter an einer bestimmten Stelle geöffnet wird und das Füllgas in den Airbag geleitet wird.

Ferner ist es bekannt, den Innendruck des Behälters zu überwachen. Hierzu ist ein Drucksensor im Behälterinnern angeordnet, von dem Signalleitungen durch eine am Behälter vorgesehene isolierende Durchführung nach außen geführt sind. Diese Durchführung ist mit hohem Aufwand mit der Behälterwand zu verbinden, damit keine Leckstellen an den Verbindungsstellen auftreten. Da das bei der Durchführung verwendete Isoliermaterial und die Metallwandung des Druckbehälters unterschiedliche Ausdehnungskoeffizienten aufweisen, sind auch die fertigungstechnischen Anforderungen an die Durchführung sehr hoch. Da innerhalb der geforderten langjährigen (10 bis 15 Jahre) Betriebsdauer des Gasgenerators Druckverluste im Behälterinnern auftreten können, ist die Überwachung des Innendruckes des Druckbehälters von Bedeutung.

Aufgabe der Erfindung ist es daher, bei einem Gasgenerator der eingangs genannten Art eine Drucküberwachung zu schaffen, welche mit einfachen Mitteln erreicht wird.

Diese Aufgabe wird erfindungsgemäß dadurch gelöst, daß ein den Behälterinnenraum mitumschließendes Behälterteil, auf welches der Innendruck im Normalbetrieb wirkt, ein Bestandteil des Drucksensors ist und beim Abfall des Innendruckes unter einen bestimmten Wert seine Normalposition zur Auslösung eines Sensorsignals bewegbar ist.

Durch die Erfindung wird ein in die starre, insbesondere aus Edelstahl bestehende Behälterwand integrierbares Behälterteil geschaffen, welches auf einen Druckabfall im Behälterinnern durch eine Bewegung reagiert. Diese Bewegung läßt sich außerhalb des Behälters erfassen, so daß ohne aufwendige Durchführungen außerhalb des Behälters das Sensorsignal erzeugt werden kann. Dies kann beispielsweise dadurch veranlaßt werden, daß durch die Bewegung des Behälterteils ein elektrischer Stromkreis geschlossen wird, in welchem ein akustisches, optisches Signal oder eine sonstige Anzeige geschaffen werden, welche den Druckabfall im Innern des Druckgehälters kenntlich macht.

Um das Behälterbauteil beweglich an der starren, insbesondere aus Edelstahl bestehenden Behälterwand lagern zu können, kann das Behälterteil verformbar sein oder mittels eines verformbaren Bauteils an der starren Behälterwand gelagert sein. Hierzu kann das Behälterteil und/oder das verformbare Bauteil nach Art eines Aneroidbarometergehäuses aufgebaut sein. Dieses besteht bekanntlich aus einer Metalldose mit elastischen, insbesondere wellblechartigen Grundflächen, welche die Verformbarkeit gewährleisten.

In bevorzugter Weise kann das bewegbare Baute und/oder seine verformbare Abstützung an der übrigen starren Behälterwand als mit entsprechenden Sollbruchstellen versehener Berstverschluß, insbesondere Berstboden, ausgebildet sein, der in bekannter Weise zum Befüllen des Airbags, beispielsweise mit Hilfe eines pyrotechnisch angetriebenen Betätigungsmittels geöffnet wird.

Insbesondere kann die das elektrische Signal für die Anzeige des Druckabfalls erzeugende Einrichtung jeweils nur beim Starten des Fahrzeugs einschaltbar sein. Durch eine zusätzliche elektrische Halteeinrichtung kann dann die Anzeige auch nach dem Starten weiterhin beibehalten werden.

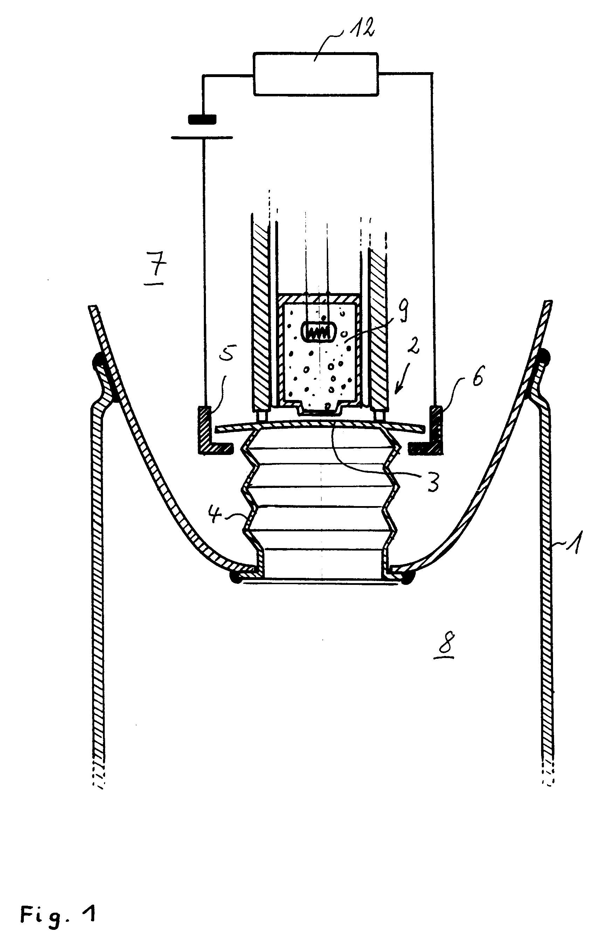

Anhand der Figuren wird an Ausführungsbeispielen die Erfindung noch näher erläutert. Es zeigt:
- 'Fig. 1:: ein erstes Ausführungsbeispiel;
und

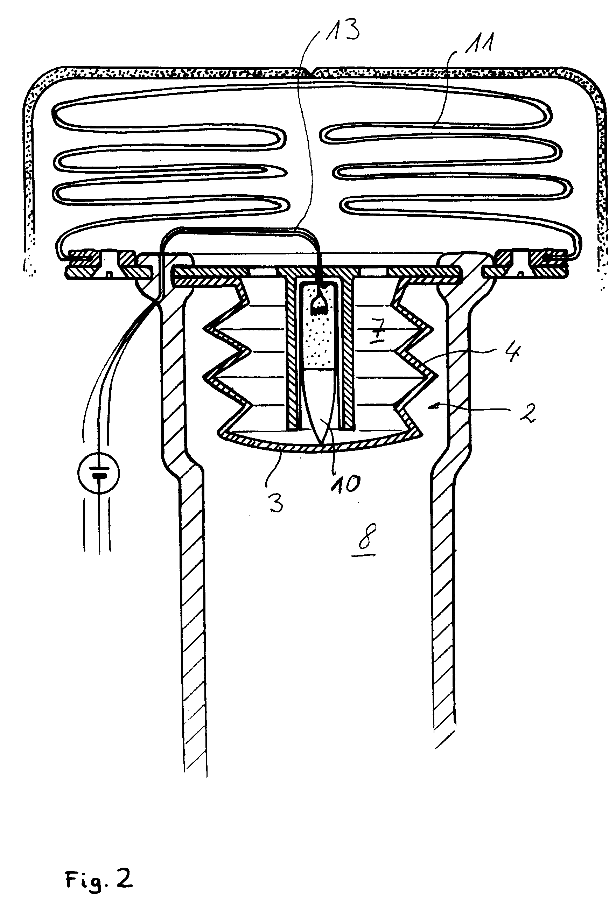

- Fig. 2:: ein zweites Ausführungsbeispiel.

Bei den in den beiden Ausführungsbeispielen gezeigten Gasgeneratoren ist in einem Innenraum 8 eines Druckbehälters 1 ein Füllgas unter Druck in Vorrat gehalten. Zur Überwachung des Innendrucks dient ein Drucksensor 2. Sobald der Innendruck unter einen bestimmten Wert abfällt, bewirkt der Drucksensor 2, daß ein Signal, welches bei den dargestellten Ausführungsbeispielen ein elektrisches Signal ist, erzeugt wird, das den Druckabfall im Innenraum 8 anzeigt.

Bei beiden Ausführungsbeispielen weist der Drucksensor 2 ein bewegliches Behälterteil 3 auf. Dieses bewegliche Behälterteil 3 ist mittels eines verformbaren Bauteils 4 an der übrigen starren Wandung des Druckbehälters 1 abgestützt. Bei den dargestellten Ausführungsbeispielen sind die verformbaren Bauteile 4 balgartig wie das Gehäuse eines Aneroidbarometers ausgebildet.

Bei den dargestellten Ausführungsbeispielen bilden das bewegliche Behälterteil 3 und das verformbare Bauteil 4 den Behälterverschluß, welcher als Berstverschluß ausgebildet sein kann, der durch eine insbesondere pyrotechnisch betätigte Einrichtung 9, welche in bekannter Weise ausgebildet sein kann, geöffnet werden kann. Hierzu besitzt das Behälterteil 3 und/oder das verformbare Bauteil 4 Sollbruchstellen, die durch die Einrichtung 9 geöffnet werden. Hierzu kann ein Betätigungsteil, beispielsweise in Form eines Kolbens bzw. Projektils 10 (Fig. 2) nach Zündung pyrotechnisch angetrieben werden, so daß die Sollbruchstellen des Berstverschlusses geöffnet werden.

Das im Innenraum 8 befindliche Füllgas kann dann in einen Raum 7 strömen, welcher mit dem Innern eines zu füllenden Airbags 11 (Fig. 2) verbunden ist.

Wenn der Innendruck im Innenraum 8 unter einen bestimmten Wert absinkt, bewegt sich aufgrund der elastischen Verformbarkeit des Bauteils 4 das Behälterteil 3 in Richtung auf den Innenraum 8 zu. In den Darstellungen der Figuren 1 und 2 bewegen sich die Behälterteile 3 nach unten. Bei dem in der Fig. 1 dargestellten Ausführungsbeispiel kommt das Behälterteil 3, welches aus leitfähigem Material, insbesondere aus Metall, besteht, mit elektrischen Kontakten 5 und 6 in Berührung, wodurch ein elektrischer Stromkreis geschlossen wird. In diesem elektrischen Stromkreis ist eine Anzeigeeinrichtung 12 vorgesehen, welche den Druckabfall im Innenraum 8 des Druckbehälters 1 infolge der Bewegung des Behälterteils 3 anzeigt.

Das Ausführungsbeispiel der Fig. 1 kann jedoch auch so ausgebildet sein, daß durch die Bewegung des Behälterteils 3 ein geschlossener Stromkreis unterbrochen wird, durch welchen die Aktivierung der Anzeigeeinrichtung 12 verursacht wird. Die Versorgung des geschlossenen Stromkreises kann jeweils nur beim Starten des Fahrzeugs eingeschaltet sein. Durch eine entsprechend ausgebildete Diagnoseeinrichtung läßt sich feststellen, ob der Stromkreis geschlossen ist oder nicht. Falls der Stromkreis unterbrochen ist, kann dann, wie schon erläutert, die Anzeigeeinrichtung 12 aktiviert werden.

Bei dem in der Fig. 2 dargestellten Ausführungsbeispiel ist bei dem erforderlichen Innendruck im Innenraum 8 das bewegliche Behälterteil 3 in Berührung mit dem Betätigungsteil bzw. Projektil 10. Über einen 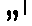 Masse"-Leiter 13, welcher durch die elektrische Zündeinrichtung für das Anzünden der pyrotechnischen Einrichtung 9 verursachte Kriechströme nach Masse ableitet, läßt sich feststellen, ob das Behälterteil 3 mit dem Betätigungsteil 10 in Kontakt ist oder nicht. Durch eine nicht näher dargestellte Diagnoseeinrichtung läßt sich insbesondere beim Starten des Fahrzeugs feststellen, ob ein Kurzschlußstrom durch das Massekabel 13 fließt oder nicht. Falls dieser Kurzschlußstrom nicht fließt, ist der Kontakt zwischen dem beweglichen Behälterteil 3 und dem Betätigungsteil 10 unterbrochen, wodurch der Druckabfall im Innenraum 8 sich anzeigen läßt. Die Diagnoseeinrichtung kann berührungslos, beispielsweise kapazitiv oder induktiv, den im Massekabel 13 beim Starten des Fahrzeugs fließenden Kurzschlußstrom überwachen. Fehlt dieser Kurzschlußstrom, wird, wie schon erläutert, die Anzeigeeinrichtung zur Anzeige des verminderten Innendruckes aktiviert.

## Patentansprüche

1. Gasgenerator zum Befüllen eines in einem Fahrzeug angeordneten Airbags mit einem Druckbehälter, in welchem bei Normalbetrieb des Fahrzeugs bei geschlossenem Behälter ein Füllgas unter Druck gehalten wird und der zum Befüllen des Airbags geöffnet wird, und einem Drucksensor zur Überwachung des im Behälterinnern herrschenden Innendrucks,
dadurch **gekennzeichnet,**
daß ein den Behälterinnenraum mitumschließendes Behälterteil, auf welches der Innendruck im Normalbetrieb wirkt, ein Bestandteil des Drucksensors ist und beim Abfall des Innendrucks unter einen bestimmten Wert aus seiner Normalposition zur Auslösung eines Sensorsignals bewegbar ist.

2. Gasgenerator nach Anspruch 1, dadurch gekennzeichnet, daß das Behälterteil mittels eines beim Innendruckabfall verformbaren Bauteils an der starren Behälterwand gelagert und/oder selbst verformbar ist.

3. Gasgenerator nach Anspruch 1 oder 2, dadurch gekennzeichnet, daß das bewegbare Behälterteil das zum Befüllen des Airbags geöffnete Bauteil am Druckbehälter ist.

4. Gasgenerator nach Anspruch 3, dadurch gekennzeichnet, daß das bewegbare Behälterbauteil und/oder seine verformbare Abstützung an der starren Behälterwand als Berstverschluß ausgebildet ist.

5. Gasgenerator nach einem der Ansprüche 1 bis 4, dadurch gekennzeichnet, daß das vom bewegbaren Behälterbauteil ausgelöste Sensorsignal ein elektrisches Signal ist.

6. Gasgenerator nach einem der Ansprüche 1 bis 5, dadurch gekennzeichnet, daß die das elektrische Signal erzeugende Einrichtung jeweils beim Starten des Fahrzeugs einschaltbar ist.
